# FASCICULE DE BREVET EUROPEEN

(11) **EP 1 378 422 B1**
(45) Date de publication et mention de la délivrance du brevet: **19.10.2005**
(21) Numéro de dépôt: 03370026.1
(22) Date de dépôt: 01.07.2003
(51) Int. Cl.: B62D 25/20, B62D 33/02, B62D 29/04, B32B 21/04

(54) **Paroi inférieure de la caisse destinée à équiper un véhicule de transport, caisse et véhicule de transport équipés de ladite caisse**
Unterboden für Lastwagenladeraum, Laderaum, Lastwagen
Lower panel of a cargo box for a transport vehicle, cargo box, and transport vehicle

(30) Priorité: 03.07.2002 FR 0208340
(43) Date de publication de la demande: 07.01.2004
(73) Titulaire: Delcroix, S.A., 62450 Bapaume (FR)
(72) Inventeur: Devise, Jean Marc, 62450 Bapaume (FR); Vanstraceele, Bertrand, 62111 Bienvillers au Bois (FR)
(74) Mandataire: Hennion, Jean-Claude

(56) Documents cités:
- EP-A- 0 061 919
- EP-A- 0 807 566
- GB-A- 2 139 557
- NL-A- 9 200 563

## Description

L'invention se rapporte à une paroi inférieure de caisse destinée à équiper un véhicule de transport de marchandises dit léger selon les caractéristiques du préambule de la revendication 1 connue du EP-A-0807 566.

Elle se rapporte également à la caisse et au véhicule de transport équipés de la dite caisse.

Pour le transport des marchandises, on connaît deux types de véhicules à savoir les camions pouvant transporter une charge d'au moins dix tonnes ou les véhicules légers pour lesquels la charge est limitée et qui ne nécessite pas de permis spéciaux pour les conduire.

Ces véhicules légers auxquels se rapporte l'invention ont l'avantage de pouvoir circuler facilement dans les zones urbaines qui seront bientôt impossibles d'accès pour les camions à gros tonnages en raison de la réglementation.

Ces véhicules légers sont construits sur la base de véhicule porteur existant composé d'un châssis et d'un moteur avec sa cabine chauffeur livrée sans la caisse.

Les constructeurs de ces caisses ont donc pour tâche de construire des caisses selon les besoins des clients et de les monter sur les châssis des véhicules. A cet effet les constructeurs disposent de deux technologies bien distinctes pour la réalisation de ces caisses. Une première technologie, dans le domaine de la plasturgie, consiste à réaliser des caisses, notamment sous forme de coque, dans lesquelles les fibres assurent la résistance de l'ensemble. Une seconde technologie dans le domaine de la métallurgie consiste à utiliser, pour la réalisation des caisses, des panneaux de tôles acier en aluminium. Les solutions techniques employés dans ces deux technologies ne sont pas transposables et la présente invention se situe dans l'emploi de la seconde technologie.

Pour des questions de réglementation, il est déconseillé de toucher au châssis du véhicule et le constructeur de la caisse du véhicule doit utiliser exclusivement les points d'ancrage prévus sur le châssis.

Ces points d'ancrage sont généralement insuffisants pour certaines caisses dont les parois sont composites, c'est à dire constituées par des couches de matériau relativement plus fragile que l'acier et les fabricants de caisse font donc appel à un faux châssis fixé sur le châssis existant et sur ce faux châssis sont prévus des points d'ancrages adaptés à la caisse.

Des points d'ancrage sont insérés localement lors de la fabrication de la paroi inférieure de la caisse et sont utilisés pour fixer la caisse sur le faux châssis qui dispose de points d'ancrage spécifiques pour le châssis du véhicule qu'il doit équiper.

Ces faux châssis sont constitués de longerons en acier et de traverses.

Cette solution utilisée depuis toujours pénalise notamment la charge utile.

En effet, le poids de ce faux châssis diminue cette charge utile qui, par ailleurs, peut déjà être pénalisée par l'utilisation de plus en plus courante d'un hayon élévateur et bien souvent d'un dispositif de refroidissement pour les véhicules dits frigorifiques.

Un autre problème réside dans la multiplicité des points d'ancrage entre la caisse et le faux châssis.

En effet, la caisse est une paroi en composite stratifié composée de panneaux de bois, de polystyrène extrudé, de tôles acier en aluminium.

Pour la fixation sur le faux châssis, on fait généralement appel à des vis dont la tête vient s'appuyer sur la face inférieure du faux châssis et qui, traversant ladite paroi, reçoivent un écrou en appui sur la face supérieure de la paroi.

Des inserts en plastique sont souvent placés lors de la construction de la paroi pour permettre le passage des vis et offrir un appui plus résistant qu'un panneau de contreplaqué.

Pour éviter de mettre des inserts en plastique, il est connu d'insérer dans la construction de la paroi, des tubes d'acier transversaux pour la reprise des efforts mais cela pénalise le poids par rapport aux inserts en plastique et ne résout pas le problème du faux châssis sauf à prévoir des emplacements particuliers mais qui ne sont pas reproductibles d'un véhicule à un autre.

Un avantage de l'utilisation d'un faux châssis, c'est qu'il permet de rehausser le fond de la caisse par rapport aux roues et d'éviter que les roues tendent la paroi lorsque les suspensions sont écrasées.

L'invention se propose d'apporter une solution aux problèmes évoqués ci-dessus.

A cet effet, l'invention a pour objet une paroi inférieure de caisse destinée à équiper un véhicule de transport de marchandises, dit léger, cette paroi étant constituée par assemblage de panneaux au moyen d'adhésif pour former une paroi composite, cette paroi de caisse étant caractérisée en ce qu'elle comprend deux longerons collés avec la face inférieure de la paroi, chaque longeron comprenant une lame inférieure métallique.

Elle se rapporte également à la caisse et au véhicule équipés de la dite caisse.

L'invention sera bien comprise à l'aide de la description ci-après faite à titre d'exemple non limitatif en regard du dessin ci-annexé qui représente schématiquement :
- figures 1 à 3 : l'art antérieur,
- figure 4 : une paroi inférieure selon l'invention en cours de montage sur un châssis,
- figure 5 : une coupe d'un châssis de véhicule équipé d'une paroi,
- figure 6 : une vue éclatée d'une paroi,
- figure 7 : une vue éclatée d'une variante de paroi,

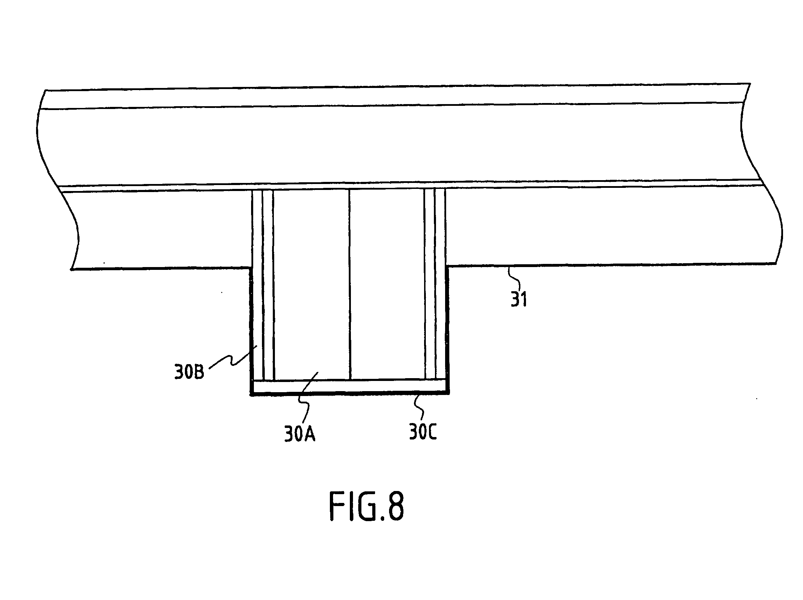

- figure 8 : un détail de la paroi de la figure 7 assemblée.

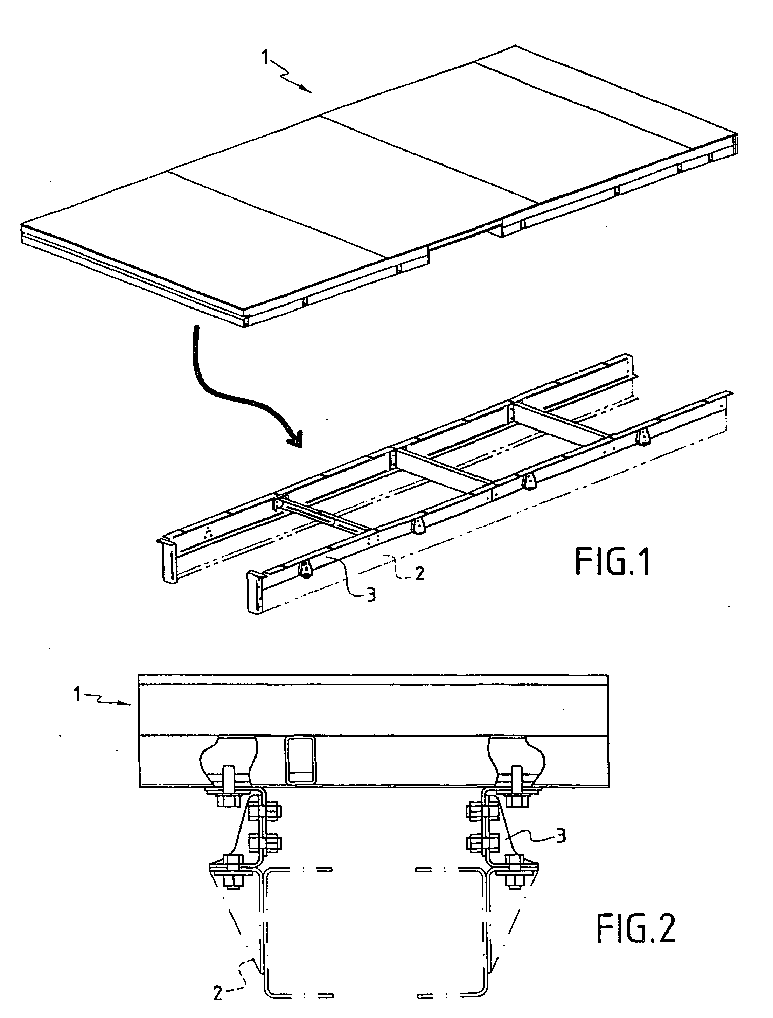

En se reportant au dessin, on voit en figures 1 et 2, le montage d'une paroi de caisse selon l'art antérieur.

Ce dessin représente une paroi 1 de caisse pour véhicule léger destinée à être posée sur un châssis 2 d'un véhicule.

Pour cela, on utilise un faux châssis 3 en acier qui est fixé sur le châssis 2 du véhicule léger et sur lequel on fixe la paroi 1.

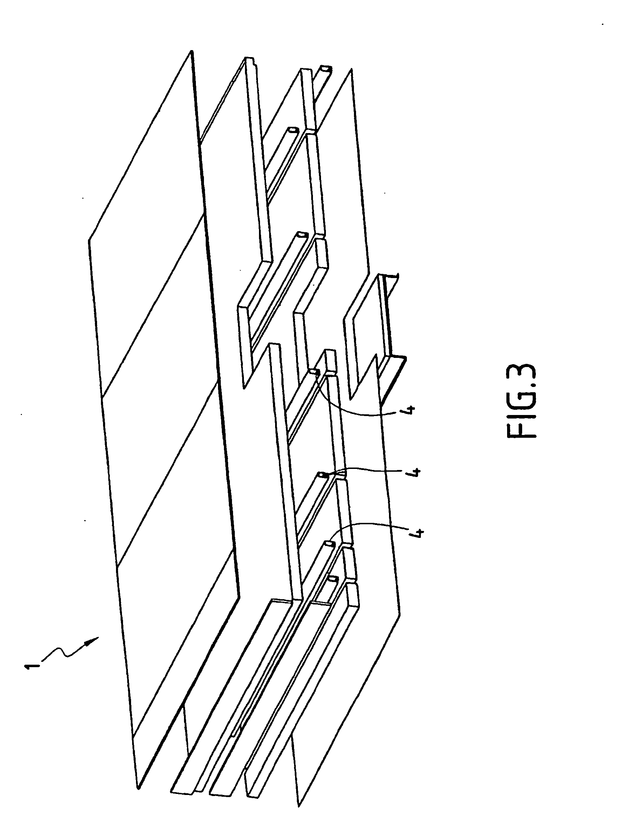

Dans cet exemple, on voit (figure 3) que la paroi est un stratifié composé de plusieurs couches notamment de polystyrène et de bois (plus précisément du contreplaqué) et de tôles acier en aluminium.

On note la présence de tube d'acier pour l'accrochage sur le faux châssis.

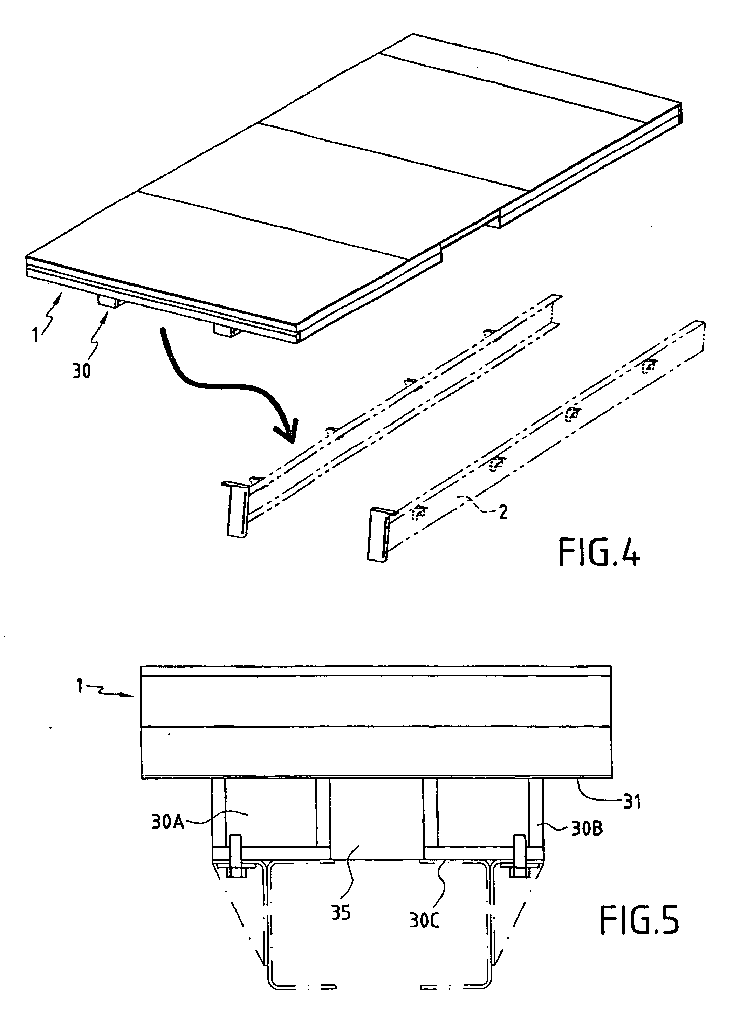

En figures 4 et suivantes, on a représenté une paroi selon l'invention.

On voit que la paroi est toujours formée par assemblage de panneaux au moyen d'un adhésif.

Selon l'invention, cette paroi comprend deux longerons 30 collés avec la face 31 inférieure de la paroi.

Dans une forme de réalisation, le longeron 30 est en plastique résistant dans lequel on peut effectuer des perçages et taraudages pour y introduire des vis.

Il pourrait s'agir de plastique armé de fibres de verre.

Dans une autre forme de réalisation, chaque longeron est composite et par exemple, constitué d'une âme 30A en matériau du type polystyrène ou similaire, d'au moins deux lames 30B de contreplaqué venant se coller sur les deux faces latérales de l'âme et d'une lame 30C inférieure métallique venant se coller sous la face inférieure de l'âme précitée.

C'est cette lame métallique qui donnera la résistance à l'arrachement pour les vis.

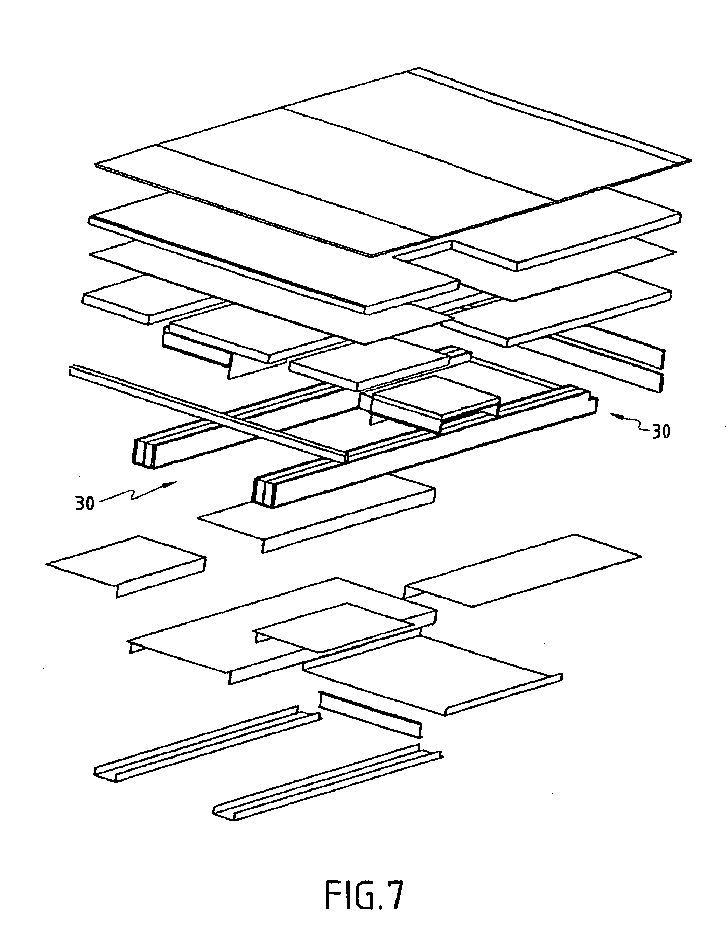

Le longeron 30 est soit collé sur la face inférieure du dernier panneau d'étendue égale à la surface de la paroi (figures 4 à 6), soit pénètre à mi-épaisseur dans la paroi (figure 7).

Dans la variante, en surépaisseur, le longeron est collé sous la face inférieure de la paroi tandis qu'avec la version encastrée, le longeron est collé avec la face inférieure latéralement mais également avec d'autres panneaux.

La version encastrée semble plus compliquée à réaliser mais apporte un plus en résistance et, surtout, facilite le serrage lors du collage.

Les pièces mises en oeuvre sont plus petites et il est beaucoup plus facile de les maintenir serrées entre elles lors du collage.

Entre les longerons, sont disposées des traverses ou de préférence une plaque 35 faisant office de traverse.

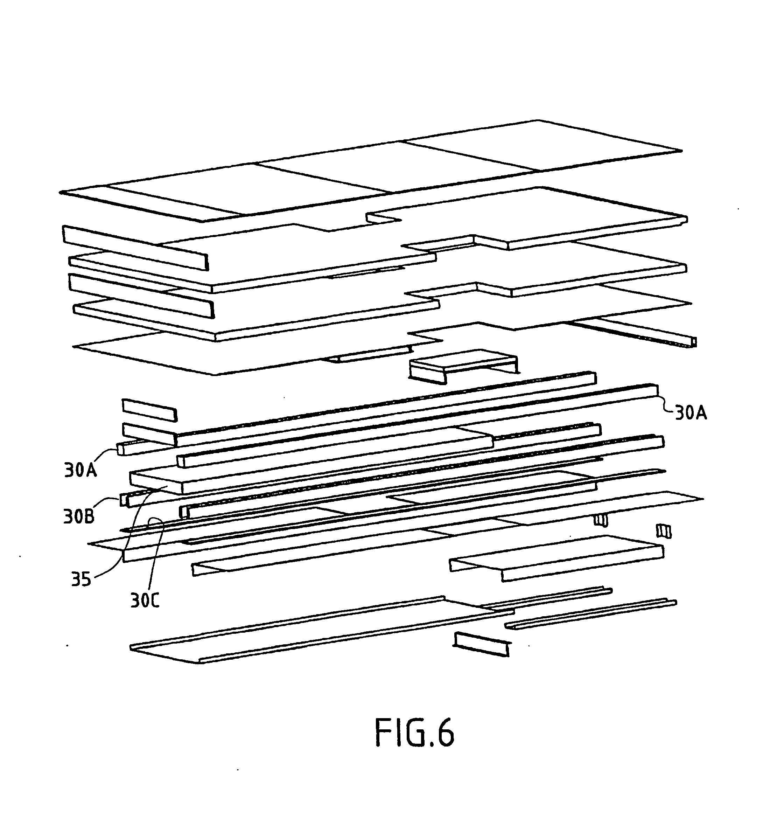

Dans le cas représenté (figures 4 et 6), on voit que cette plaque ne s'étend pas sur toute la longueur de la paroi.

Cette situation résulte de la volonté de libérer un espace lié à la présence d'un escabeau ou autres accessoires.

Ce même phénomène d'embrèvement apparaît pour le passage des roues.

La composition des longerons composites peut varier et on a représenté à titre d'exemple une solution (figure 7) selon laquelle l'âme est formée de deux poutres en polystyrène accolées encadrées par une ou deux paires de lames en contreplaqué sous lesquelles se fixe une lame métallique en acier ou en aluminium.

On peut ainsi fabriquer à la chaîne des parois inférieures ayant les mêmes caractéristiques et percer et tarauder au dernier moment les emplacements pour le passage des vis.

Le poids de cette nouvelle paroi est plus faible que la somme de l'ancienne paroi avec son faux châssis.

En ce qui concerne la résistance, celle-ci étant répartie sur toute la surface des longerons collés, elle s'avère meilleurs qu'auparavant où il y avait des concentrations de contraintes.

## Revendications

1. Paroi inférieure de caisse destinée à équiper un véhicule de transport constituée par assemblage de panneaux au moyen d'adhésif pour former une paroi composite,
cette paroi étant **CARACTERISEE en ce qu**'elle comprend deux longerons (30) collés avec la face (31) inférieure de la paroi, chaque longeron (30) étant composite et comprenant une lame (30C) inférieure métallique.

2. Paroi inférieure de caisse selon la revendication 1 **caractérisée en ce que** chaque longeron est constitué d'une âme (30A) en matériau du type polystyrène ou similaire, d'au moins deux lames (30B) de contreplaqué venant se coller sur les deux faces latérales de l'âme et de la lame (30C) inférieure métallique venant se coller sous la face inférieure de l'âme précitée.

3. Paroi inférieure de caisse selon la revendication 1 **caractérisée en ce que** le longeron (30) est sur la face inférieure du dernier panneau d'étendue égale à la surface de la paroi.

4. Paroi inférieure de caisse selon la revendication 1 **caractérisée en ce que** le longeron (30) pénètre à mi-épaisseur dans la paroi.

5. Paroi inférieure de caisse selon la revendication 1 **caractérisée en ce qu'**entre les longerons, sont disposées des traverses.

6. Paroi inférieure de caisse selon la revendication 1 **caractérisée en ce qu'**entre les longerons est disposée une plaque faisant office de traverse.

7. Caisse destinée à être montée sur un véhicule léger **caractérisée en ce qu'**elle comprend une paroi inférieure selon l'une quelconque des revendications 1 à 6.

8. Véhicule léger **caractérisée en ce qu'**il est pourvu d'une caisse selon la revendication 7.

## Patentansprüche

1. Untere Kastenwand, die dazu bestimmt ist, ein Transportfahrzeug auszustatten, hergestellt durch das Zusammenfügen von Platten mit Hilfe eines Klebemittels, um eine Verbundwand auszubilden,
wobei die Wand **dadurch gekennzeichnet ist, daß** sie zwei Längsträger (30) umfaßt, die mit der Unterseite (31) der Wand verklebt sind, wobei jeder Längsträger (30) ein Verbundlängsträger ist und ein unteres Metallblatt (30C) aufweist.

2. Untere Kastenwand nach Anspruch 1, **dadurch gekennzeichnet, daß** jeder Längsträger aus einem Steg (30A) aus einem Werkstoff vom Typ Polystyrol oder einem ähnlichen Werkstoff, aus mindestens zwei Sperrholzblättern (30B), die auf den zwei Seitenflächen des Stegs verklebt sind, und aus dem unteren Metallblatt (30C) besteht, das unter der Unterseite des genannten Stegs verklebt ist.

3. Untere Kastenwand nach Anspruch 1, **dadurch gekennzeichnet, daß** der Längsträger (30) auf der Unterseite der letzten Platte eine Ausdehnung gleich der Oberfläche der Wand aufweist.

4. Untere Kastenwand nach Anspruch 1, **dadurch gekennzeichnet, daß** der Längsträger (30) in die Wand zur Dickenmitte eindringt.

5. Untere Kastenwand nach Anspruch 1, **dadurch gekennzeichnet, daß** zwischen den Längsträgern Querträger angeordnet sind.

6. Untere Kastenwand nach Anspruch 1, **dadurch gekennzeichnet, daß** zwischen den Längsträgern eine Tafel angeordnet ist, die als Querträger dient.

7. Kasten, der dazu bestimmt ist, auf einem Leichtfahrzeug befestigt zu werden, **dadurch gekennzeichnet, daß** er eine untere Wand nach einem der Ansprüche 1 bis 6 umfaßt.

8. Leichtfahrzeug, **dadurch gekennzeichnet, daß** es mit einem Kasten nach Anspruch 7 ausgestattet ist.

## Claims

1. Lower panel of a cargo box for a transport vehicle, built by assembling panels together using adhesive to form a composite panel, with this panel being **characterised by** the fact that it includes two rails (30) glued to the lower face (31) of the panel with each rail (30) being made of composite materials and possessing a lower metallic strip (30C).

2. Lower panel of a cargo box as described in claim 1 **characterised by** the fact that each rail is composed of a core (30A) of polystyrene or material of a similar type, of at least two strips (30B) of plywood, glued onto the two lateral faces of the core and of the lower metallic strip (30C) glued beneath the lower face of the aforementioned core.

3. Lower panel of the cargo box as described in claim 1 **characterised by** the fact that the rail (30) is on the lower face of the last panel with a span equal to the surface of the panel.

4. Lower panel of a cargo box as described in claim 1 **characterised by** the fact that the rail (30) enters the panel to a depth of half the thickness of the panel.

5. Lower panel of a cargo box as described in claim 1 **characterised by** the fact that there are cross-rails fitted between the rails.

6. Lower panel of a cargo box as described in claim 1 **characterised by** the fact that there is a plate acting as a cross-rail fitted between the rails.

7. Cargo box intended to be fitted to a light vehicle, **characterised by** the fact that it includes a lower panel as described in any of claims 1 to 6 whatsoever.

8. Light vehicle **characterised by** the fact that it is equipped with a cargo box as described in claim 7.
